(19) Europäisches Patentamt / European Patent Office / Office européen des brevets

(11) **EP 1 308 890 B1**

(12) **FASCICULE DE BREVET EUROPEEN**

(45) Date de publication et mention
de la délivrance du brevet:
**15.04.2009 Bulletin 2009/16**

(51) Int Cl.:
***G06T 5/30*** *(2006.01)*

(21) Numéro de dépôt: **02079395.6**

(22) Date de dépôt: **22.10.2002**

(54) **Station d'imagerie médicale à fonction d'extraction de trajetoire au sein d'un objet ramifié**

Medizinisches Abbildungssystem zum Erzeugen einer Laufbahn in einem verzweigten Objekt

Medical imaging system for extracting a trajectory within a branched object

(84) Etats contractants désignés:
**AT BE BG CH CY CZ DE DK EE ES FI FR GB GR IE IT LI LU MC NL PT SE SK TR**

(30) Priorité: **30.10.2001 FR 0114048**

(43) Date de publication de la demande:
**07.05.2003 Bulletin 2003/19**

(73) Titulaire: **Koninklijke Philips Electronics N.V.**
**5621 BA Eindhoven (NL)**

(72) Inventeur: **Deschamps, Thomas,**
**Société Civile S.P.I.D.**
**75008 Paris (FR)**

(74) Mandataire: **van Oudheusden-Perset, Laure E. et al**
**Société Civile SPID**
**156, Boulevard Haussmann**
**75008 Paris (FR)**

(56) Documents cités:
**WO-A-98/37517**          **WO-A-99/42977**
**US-A- 5 971 767**

## Description

L'invention concerne une station d'imagerie médicale incluant des moyens d'acquisition pour obtenir des images présentant des niveaux de gris, des moyens d'affichage pour afficher les images, des moyens de segmentation pour segmenter au moins un objet imagé, lesdits moyens de segmentation déterminant une zone dite segmentation délimitant l'objet imagé sur l'image, des moyens d'extraction pour extraire au moins une trajectoire au sein de la segmentation.

De multiples modalités d'acquisition d'images médicales peuvent fournir des images présentant des niveaux de gris. Ainsi, l'invention peut être utilisée pour des images obtenues par techniques ultrasonores, radiologiques ou encore de résonance magnétique. On peut noter que les niveaux de gris peuvent éventuellement être remplacés de manière équivalente par des niveaux d'une couleur particulière qui soit différente du gris.

Une station médicale selon le paragraphe introductif fournit une segmentation de l'image qui peut être exploitée par les moyens d'extraction de trajectoire. L'extraction d'une trajectoire est particulièrement importante pour l'analyse de l'image lorsque des objets longilignes sont observés : vaisseaux, intestins...

Une telle station médicale peut être réalisée à l'aide d'un procédé de traitement d'image tel que proposé dans le brevet EP 1058913. Un tel procédé permet en effet de tracer une trajectoire à l'intérieur d'une région centrale définie à partir d'une structure possédant des frontières et représentée sur une image. La région centrale est une segmentation de l'image définie à partir des caractéristiques de l'image. La trajectoire tracée à l'intérieur de la segmentation est le chemin le plus court entre deux points finaux définis comme étant les points les plus éloignés au sein de la région centrale. La technique proposée dans l'état de la technique est très rapide car elle utilise des algorithmes très rapides.

L'inconvénient de l'état de la technique réside dans le fait qu'elle permet d'extraire une trajectoire entre deux points les plus éloignés. Lorsque des objets ramifiés sont imagés, les ramifications ne sont pas détectées ni tracées. Cela est particulièrement dommageable dans le cas de vaisseaux pour lesquels il est très intéressant de disposer d'une localisation des embranchements. En effet, la station d'imagerie selon l'état de la technique ne permet pas de localiser des anévrismes ni d'accéder à la trajectoire suivie par les ramifications. On peut aussi noter que les techniques utilisant des algorithmes de squelettisation (peeling en anglais) permettent cependant d'observer les ramifications mais leur mise en oeuvre est lente et il faut ensuite nettoyer les ramifications avant de pouvoir analyser la structure des ramifications elles-mêmes. Cela peut induire des erreurs pendant le nettoyage des ramifications et conduire à des analyses erronées de l'objet imagé.

U 5,971,767 décrit une méthode d'extraction de trajectoire dans un organe tubulaire.

Un but de l'invention est de fournir une station d'imagerie médicale incluant un dispositif de tracé de trajectoires rapide permettant de tenir compte de ramifications de l'objet imagé. Tenir compte des ramifications est primordial pour l'usage de la station d'imagerie pour des vaisseaux en deux ou trois dimensions.

En effet, une station d'imagerie médicale conforme au paragraphe introductif est remarquable selon l'invention en ce que les moyens d'extraction incluent :

des moyens de positionnement d'un point initial sur la segmentation,
des moyens de propagation d'un front au sein de la segmentation à partir du point initial,
des moyens de test de connexité du front,
des moyens de labellisation des portions du front, nommées ramifications, lorsqu'un front non connexe est détecté,
des moyens d'identification de points finaux de la propagation sur les ramifications,
des moyens de tracé de trajectoire pour tracer une trajectoire à partir des points finaux et du point initial.

L'invention permet de détecter et de repérer des ramifications en détectant une perte de connexité d'un front au sein de l'objet imagé. A partir de cette détection, des points finaux pour les ramifications sont identifiés. Il est ensuite possible de tracer des trajectoires entre deux points selon la technique par exemple exposée dans le document cité de l'état de la technique. Un chemin minimal peut alors par exemple être tracé entre chaque point final et le point initial. Les algorithmes traitant de la propagation d'un front et du calcul d'un chemin minimal étant très rapides, l'invention permet d'obtenir des résultats précis et rapides.

Dans le cas particulier de vaisseaux, il est avantageux d'obtenir une trajectoire pour chaque ramification entre le point initial et le point final. Dans un autre mode de réalisation de l'invention, une seule trajectoire ramifiée est tracée après une localisation de point d'embranchement puis, par exemple, un tracé de chemin minimal, tel que décrit dans le document de l'état de la technique, entre plusieurs points pris deux à deux. Cette trajectoire ramifiée présentera des propriétés particulières et permettra des fonctions particulières à la station d'imagerie médicale.

L'invention concerne aussi un dispositif d'extraction d'une trajectoire destiné à être utilisé au sein d'une station d'imagerie médicale et un procédé d'extraction d'une trajectoire destiné à être mis en oeuvre dans une station d'imagerie médicale selon l'invention. L'utilisation d'une station d'imagerie médicale selon l'invention permet d'obtenir un tracé de trajectoires multiples ou de trajectoire ramifiée de manière très rapide et précise dès qu'une segmentation est obtenue pour un objet ramifié. Les moyens d'affichage peuvent par conséquent afficher la trajectoire sur une image ou une segmentation représentée en deux ou trois dimensions ainsi qu'éventuellement l'évolution du tracé durant la propagation du front.

L'invention sera mieux comprise à la lumière de la description suivante de quelques modes de réalisation, faite à titre d'exemples non limitatifs et en regard des dessins annexés, dans lesquels :

- la figure 1 représente un diagramme schématique d'une station d'imagerie médicale et d'un dispositif d' extraction d'une trajectoire selon l'invention,
- la figure 2 illustre schématiquement le fonctionnement des moyens de test de connexité, de labellisation des ramifications détectées et d'identification de points finaux selon un mode de réalisation préféré de l'invention sur un exemple d'objet imagé,
- la figure 3 illustre schématiquement le fonctionnement des moyens de tracé de trajectoire et de détermination de point d'embranchement selon le mode de réalisation préféré de l'invention,
- la figure 4 illustre schématiquement le fonctionnement des moyens de tracé de trajectoire ramifiée tel qu'exposé dans un mode de réalisation avantageux.

De multiples modalités d'acquisition peuvent bénéficier de l'invention au sein d'une station d'imagerie médicale selon l'invention. Dès lors qu'une image et qu'une segmentation de cette image sont obtenues à l'aide de la modalité utilisée par les moyens d'acquisition de la station d'imagerie médicale, la station médicale selon l'invention est avantageusement utilisée. Ainsi, des images obtenues par techniques ultrasonores, radiologiques ou encore de résonance magnétique peuvent être traitées par une station d'imagerie médicale selon l'invention. L'invention sera particulièrement avantageuse pour le traitement d'images représentant des objets présentant des ramifications : vaisseaux...

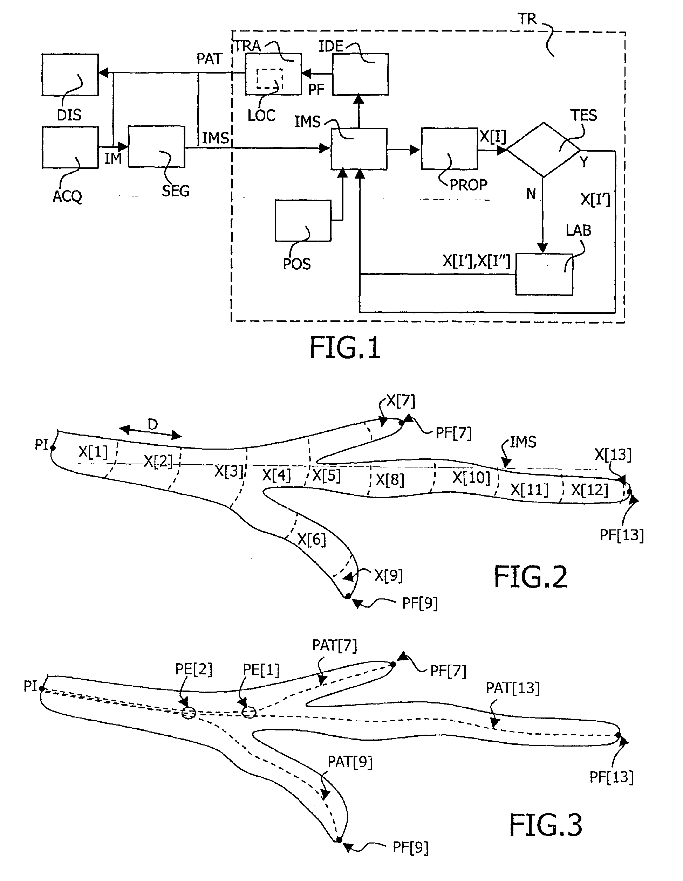

La figure 1 représente un diagramme schématique d'une station d'imagerie médicale selon l'invention. Cette station inclut des moyens d'acquisition ACQ pour obtenir des images IM, des moyens d'affichage DIS pour afficher les images IM, des moyens de segmentation SEG pour fournir une segmentation IMS, les moyens d'affichage DIS pouvant inclure en outre des moyens de visualisation, en deux ou trois dimensions d'une segmentation IMS de l'image et éventuellement de l'évolution de la segmentation IMS, des moyens d'extraction TR d'au moins une trajectoire PAT au sein de la segmentation IMS. Un but de l'invention est de fournir une station d'imagerie médicale incluant des moyens de tracé de trajectoire TR permettant de tenir compte de ramifications de l'objet imagé. Tenir compte des ramifications est primordial pour l'usage de la station d'imagerie pour des vaisseaux en deux ou trois dimensions. La station d'imagerie médicale inclut ainsi des moyens d'extraction TR incluant des moyens de positionnement POS d'un point initial sur la segmentation IMS, des moyens de propagation PROF d'un front X au sein de la segmentation IMS à partir du point initial. La propagation du front est illustrée sur la figure 2. Sur la figure 2, un point initial PI est placé sur la figure à l'aide des moyens de positionnement de point POS. Le front X se propage de proche en proche selon par exemple les propagations proposées dans les algorithmes de Fast marching dans le livre : « Level sets methods and fast-marching methods, evolving interfaces in computational geometry, fluid mechanics, computer science and material science » de J.A. Sethian édité par Cambridge University Press, 1999. Selon les descriptions de l'état de la technique, la vitesse de la propagation dépend du niveau de gris en chaque point de la segmentation IMS dit point courant lorsque les points possèdent des niveaux de gris. Dans tous les cas, la propagation ne peut se faire qu'au sein de la segmentation IMS. Généralement, la segmentation est en effet une image binaire : des points de l'image appartiennent à une zone, la segmentation, les autres points n'appartiennent pas à cette zone. Les points de la segmentation peuvent garder leurs caractéristiques propres ou posséder des caractéristiques uniformisées sur la segmentation. A l'extérieur de la segmentation, les caractéristiques des points seront telles que le front ne peut se propager sur ces points. Généralement une valeur infinie ou nulle est alors associée à ces points. Une segmentation pourra avantageusement être telle qu'à l'intérieur tous les points aient les mêmes caractéristiques. Par exemple, les caractéristiques utilisées dans le calcul de la vitesse de propagation du front (niveaux de gris dans notre cas) peuvent être uniformes sur la totalité de la segmentation et être différentes à l'extérieur (par exemple infinie ou nulle) interdisant au front de sortir de la segmentation. Les équations de propagation et les détails relatifs à cette propagation de front sont accessibles à l'homme du métier dans le livre de Sethian. Avantageusement la propagation est réalisée en utilisant des algorithmes de type plus court chemin qui recherchent le trajet le moins coûteux entre les chemins possibles pour la propagation d'un front. La propagation est continue et se fait dans toutes les directions. Cependant en présence d'une segmentation déjà produite de l'image, le front reste à l'intérieur de la zone dite segmentation. Le coût des chemins est donné à l'aide d'une équation donnée, par exemple, l'équation d'Eikonal avec, éventuellement, une vitesse dépendante des niveaux de gris dans la segmentation. La propagation pouvant se faire dans des images en deux ou en trois dimensions dans l'état de la technique, il est notable de souligner que l'invention peut être également mise en oeuvre pour des images planes en deux dimensions ou des images spatiales en trois dimensions. La propagation du front sur la segmentation IMS est figurée sur la figure 2 par les pointillés, le front se déplaçant de la gauche, donc du point initial, vers la droite en passant par les positions successives illustrées par les pointillés. En partant du point initial, le front est, par exemple, labellisé par la valeur 1 et donc noté X[1]. La labellisation du front utilise des connaissances bien connues de l'homme du métier qui connaît des moyens pour attribuer une référence à une entité (ici un front) afin de la repérer au sein d'un algorithme. Les moyens d'extraction de trajectoire TR incluent ainsi des moyens de labellisation LAB du front. Les moyens d'extraction de trajectoire incluent en outre des moyens de test de connexité TES du front X qui permettent de détecter si le front est connexe, c'est-à-dire formé d'une surface connexe ou si le front est constitué de deux ou plusieurs surfaces connexes. Ce test de connexité peut être réalisé en deux ou trois dimensions selon les techniques relatives à un tel test de connexité présentées par exemple dans le livre : « Analyse d'images : filtrage et segmentation » de J.P. Coquerez, S. Philip, et al. édité par Masson, 1995. Le test de connexité se fait de manière récursive avec une fonction qui s'appelle elle même et qui renvoie sur les points voisins. Lorsque le test de connexité est positif (cas Y), le front est connexe. Dans le mode de réalisation préféré de l'invention, la labellisation du front est modifiée, par exemple, incrémentée de 1, même si le front est encore connexe. C'est le cas sur la figure 2 où le test de connexité est réalisé à chaque fois que le front a parcouru une distance D. Sur cette figure, au premier test réalisé lorsque le front a parcouru une distance D du point initial, le front est détecté connexe. Les distances parcourues (qui sont en réalité des distances pondérées dès que les niveaux de gris sont divers au sein de la segmentation) sont avantageusement calculées en utilisant une technique telle qu'exposée dans l'article « Minimal paths in 3D images and application to virtual endoscopy », présenté à European Conference on Computer Vision, ECCV'00, Dublin, Ireland, 2000, de T. Deschamps et L.D. Cohen qui propose une méthode pour calculer une distance sur un chemin de propagation de front par Fast Marching. Sur la figure 2, le front est ainsi labellisé X[2], jusqu'au test suivant. Lorsque le test de connexité est négatif (cas N) le front n'est pas connexe et est constitué de plusieurs portions de front qu'il faut alors labelliser différemment pour pouvoir les distinguer. Sur la figure 2, c'est le cas du front labellisé X[4] qui est testé à une distance égale à quatre fois la distance D à partir du point initial PI. Le front est ici détecté non connexe dans sa propagation au sein de la segmentation IMS. En effet, sur la figure 2, il apparaît que le front X[4] est divisé en deux à une distance égale à 4D du point initial. Les deux portions de front sont alors labellisées différemment X[5] et X[6]. Ainsi, en se référant à nouveau à la figure 1, les moyens d'extraction de trajectoires TR selon l'invention incluent des moyens de labellisation LAB des portions du front alors labellisées X[I'], X[I''], lorsqu'un front non connexe X[I] est détecté. Si un nombre de portions supérieur à deux est détecté, autant de labels seront attribués à ces portions. Il est aussi possible d'envisager que les portions de front soient labellisés par d'autres données que des chiffres, par exemple, des lettres ou des valeurs qui permettent de garder en mémoire les labels des portions de front antécédents, c'est-à-dire qui ont donné naissance au front étudié. Il est aussi possible dans un autre mode de réalisation de laisser la même valeur à la labellisation du front jusqu'à ce que le test de connexité soit négatif, auquel cas la valeur de la labellisation est modifiée, par exemple incrémentée de 1, pour une des portions de front détectée et gardée égale ou aussi modifiée pour une autre portion de front. Ensuite la propagation du front continue jusqu'à ce qu'à nouveau il ait parcouru la distance D. La valeur de la distance et le choix de cette valeur sont une issue importante. Il est possible de choisir une distance D de la taille d'une dimension d'un pixel ou d'un voxel de l'image. Dans ce cas, le test de connexité est réalisé à chaque avancée du front correspondant à la taille d'un voxel. Il est ainsi possible de choisir une distance D allant de la taille d'un pixel ou voxel jusqu'à la taille maximale de l'objet. Cependant, dans le mode de réalisation préféré, la valeur de la distance D est choisie de manière à être entre ces deux extrêmes. Un tel choix permet en effet de détecter uniquement les ramifications qui ont une longueur environ supérieure à la valeur de la distance D. Ainsi la valeur de D est avantageusement choisie légèrement inférieure à la taille la plus petite attendue pour une ramification. Un tel choix permet de ne pas détecter les détails de l'objet comme étant des ramifications (ce qui n'est pas le cas, au passage, avec les algorithmes de squelettisation). Cela permet de lisser le résultat en quelque sorte, en excluant de la détection les ramifications inférieures à une certaine taille, c'est-à-dire, en limitant la recherche de ramifications à celles de taille supérieure à la valeur de D. L'invention permet ainsi d'obtenir une détection des ramifications précise et modulable en fonction des informations que l'utilisateur de la station d'imagerie médicale souhaite extraire et analyser de l'image. Ainsi, la valeur de la distance D est avantageusement offerte en paramètre modifiable à l'utilisateur. Lorsque la propagation du front s'est faite sur la totalité des points de la segmentation, des moyens d'identification IDE identifient des points finaux PF de la propagation sur les ramifications qui portent les labels attribués en fin de ramification. Il suffit pour cela qu'un tableau soit par exemple généré pour enregistrer tous les labels attribués avec les labels qui les ont précédé. Dans ce tableau sont alors recherchés les labels qui n'ont pas de succédant. Pour chaque front pour lequel il n'y a pas de label succédant, est alors identifié le point le plus lointain du point initial. Une technique telle qu'utilisée dans le brevet de l'état de la technique peut être ici avantageusement utilisée pour déterminer le point le plus lointain, par exemple par calcul de distances au point initial maximales à l'aide, par exemple, de la méthode exposée dans l'article cité ci-dessus de T. Deschamps et L.D. Cohen.

Sur la figure 2, les points finaux PF[7], PF[9] et PF[13], sont définis par la plus grande distance entre le point initial PI et un point appartenant au front portant un label qui ne possède pas de label succédant. Sur la figure 2, ces fronts sont labellisés : X[7], X[9] et X[13].

Enfin, les moyens d'extraction de trajectoire selon l'invention incluent des moyens de tracé de trajectoire TRA pour tracer une trajectoire PAT à partir des points finaux PF et du point initial PI selon les techniques de tracé de chemin minimal de l'état de la technique. Cela est illustré sur la figure 3 qui représente trois trajectoires PAT[7], PAT[9] et PAT[13] tracées entre les points finaux PF[7], PF[9] et PF[13] et le point initial PI.

Ainsi, l'invention permet de détecter et de repérer des ramifications en détectant une perte de connexité d'un front au sein de l'objet imagé. A partir de cette détection, des points finaux sont identifiés. Il est ensuite possible de tracer des trajectoires entre deux points selon la technique par exemple exposée dans le document cité de l'état de la technique. Un chemin minimal peut par exemple être tracé entre chaque point final et le point initial.

Dans le cas particulier de vaisseaux, il est avantageux d'obtenir une trajectoire pour chaque ramification entre le point initial et le point final. Il est alors possible de se localiser au sein du vaisseau, ce qui est très utile pour les interventions chirurgicales notamment.

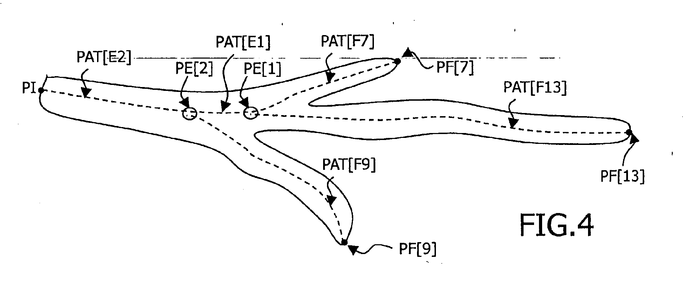

Dans un autre mode de réalisation particulièrement avantageux de l'invention, une seule trajectoire ramifiée est tracée. Ce mode de réalisation met en oeuvre des moyens de localisation LOC de point d'embranchement PE mis en oeuvre au sein même des moyens de tracé de trajectoire TRA. Pour tracer la trajectoire PAT, les moyens de tracé TRA utilisent en général des méthodes de tracé de chemin minimaux par descente de gradient pas à pas à partir d'un point final vers le point initial. L'image est une grille cartésienne constituée de pixels en deux dimensions et de voxels en trois dimensions. Le tracé ainsi obtenu est sous-pixelique ou sous-voxelique. Durant la descente de gradient ayant débuté à un point final donné, tous les pixels ou voxels qui sont traversés par la trajectoire tracée sont alors labellisés par un label propre au point final. Les moyens de localisation de points d'embranchement définissent un critère de « point voisin ». Deux points sont considérés voisins si la distance entre eux est inférieure à un multiple, par exemple $\sqrt{2}$ en deux dimensions ou $\sqrt{3}$ en trois dimensions, de la taille d'une dimension d'un pixel ou d'un voxel. Il est possible de choisir un critère de « point voisin » plus ou moins fin en choisissant des multiples plus ou moins petits. Cela peut être utile si on veut détecter les embranchements quand les trajectoires sont encore éloignées ou au contraire les détecter quand elles sont très proches. Sur la trajectoire durant la descente de gradient, les moyens de localisation LOC testent chaque pixel ou voxel et leurs voisins inclus dans une surface ou un volume défini par la valeur du multiple. Si un pixel ou un voxel voisin d'un point de la trajectoire tracée possède le label d'un autre point final, une intersection de chemin est détectée. Lorsqu'une intersection est détectée, le label des pixels ou des voxels traversés par la trajectoire durant la descente de gradient postérieure sera un nouveau label repérant le point d'embranchement. Il est aussi possible de garder un des labels d'un des points finaux dont les trajectoires se sont rencontrées. En se référant à la figure 3, les points d'embranchement PE sont identifiés sur l'image et servent pour le tracé de la trajectoire par descente de gradient postérieur à la localisation du point d'embranchement jusqu'à la rencontre d'un autre embranchement ou du point initial. Une trajectoire ramifiée est constituée au final. La trajectoire ramifiée selon une descente de gradient composite est finalement constituée de plusieurs portions de chemin minimaux respectivement entre les points finaux et les points d'embranchement, PAT[F7], PAT[F9], PAT[F13] sur la figure 4, entre les points d'embranchements PE[1] et PE[2] eux-mêmes, PAT[E1] sur la figure 4, et entre les points d'embranchement et le point initial, PAT[E2] sur la figure 4. Cette trajectoire ramifiée permet à la station d'imagerie médicale de posséder des fonctions particulières. En effet il est alors possible d'étudier sélectivement une portion d'une structure ramifiée sans avoir à observer la totalité de la trajectoire. Ainsi si un anévrisme est présent sur la ramification qui possède le point final PF[13], il sera facile de sélectionner une fonction de calcul de section uniquement sur cette partie, de même, si il est détecté sur la portion portant le label du point d'embranchement PE[1], la sélection se fera ainsi sur la portion entre les points d'embranchement PE[1] et PE[2]. La localisation d'un anévrisme est alors plus sûre que lorsque la totalité des ramifications est observée, pouvant conduire à des erreurs de section par la présence d'embranchements non détectés qui peuvent grossir artificiellement cette section.

Les modes de réalisation des moyens de tracé de trajectoire présentés peuvent être utilisés seuls ou en combinaison entre eux. Ainsi, on peut noter que la combinaison des deux modes de réalisation présentés est particulièrement avantageuse. En effet, la combinaison de ces deux modes permet d'étudier des trajectoires multiples générées par le premier mode de réalisation pour chaque ramification entre un même point initial et des points finaux particuliers à chaque ramification et une trajectoire unique ramifiée qui permet de localiser chaque portion de ramification et d'étudier l'objet imagé dans sa structure ramifiée et dans son ensemble.

L'invention concerne aussi un dispositif d'extraction d'une trajectoire destiné à être utilisé au sein d'une station d'imagerie médicale et un procédé d'extraction d'une trajectoire destiné à être mis en oeuvre dans une station d'imagerie médicale selon l'invention.

Un dispositif d'extraction d'une trajectoire selon l'invention est destiné à être couplé avec des moyens de segmentation qui fournissent au dispositif une segmentation d'une image représentant un objet imagé dans une image présentant des niveaux de gris. Un tel dispositif peut avantageusement être mis en oeuvre au sein d'une station médicale telle que décrite ci-avant. A ce propos, les moyens d'extraction TR représentés sur la figure 1 constituent un tel dispositif d'extraction d'une trajectoire selon l'invention. Ledit dispositif inclut des moyens de positionnement d'un point initial sur la segmentation, des moyens de propagation d'un front au sein de la segmentation à partir du point initial, des moyens de test de connexité du front, des moyens de labellisation des portions du front, nommées ramifications, lorsqu'un front non connexe est détecté, des moyens d'identification de points finaux de la propagation sur les ramifications, des moyens de tracé de trajectoire pour tracer une trajectoire entre deux points donnés de l'image. Ces moyens sont identiques dans leurs caractéristiques principales à ceux utilisés au sein de la station d'imagerie médicale telle que décrite ci-dessus.

Un procédé d'extraction d'une trajectoire selon l'invention est destiné à être couplé avec un procédé de segmentation qui fournit au procédé d'extraction, une segmentation d'une image représentant un objet imagé dans une image présentant des niveaux de gris. Un tel procédé est destiné à être mis en oeuvre au sein de dispositif d'extraction d'une trajectoire tel que décrit ci-avant, ou au sein d'une station d'imagerie médicale telle que décrite auparavant. Ledit procédé inclut une étape de positionnement d'un point initial sur la segmentation, une étape de propagation d'un front au sein de la segmentation à partir du point initial, une étape de test de connexité du front activée chaque fois que le front a parcouru une distance prédéterminée, une étape de labellisation des portions du front, nommées ramifications, lorsqu'un front non connexe est détecté, une étape d'identification de points finaux de la propagation sur les ramifications, une étape de tracé de trajectoire pour tracer une trajectoire entre deux points donnés de l'image. L'utilisation d'un procédé selon l'invention, d'un dispositif selon l'invention, d'une station d'imagerie médicale selon l'invention permet d'obtenir un tracé de trajectoires multiples ou de trajectoire ramifiée de manière très rapide et précise dès qu'une segmentation est obtenue pour un objet ramifié. Les moyens d'affichage peuvent par conséquent afficher la trajectoire sur une image ou une segmentation représentée en deux ou trois dimensions ainsi qu'éventuellement l'évolution du tracé durant la propagation du front.

Il existe de nombreuses façons de mettre en oeuvre les fonctions présentées dans les moyens du dispositif et les étapes du procédé selon l'invention par des moyens logiciels et/ou matériels accessibles à l'homme du métier. C'est pourquoi les figures sont schématiques. Ainsi, bien que les figures montrent différentes fonctions réalisées par différents blocs, cela n'exclut pas qu'un seul moyen logiciel et/ou matériel permette de réaliser plusieurs fonctions. Cela n'exclut pas non plus qu'une combinaison de moyens logiciels et/ou matériels permette de réaliser une fonction.

Bien que cette invention ait été décrite en accord avec les modes de réalisation présentés, un homme du métier reconnaîtra immédiatement qu'il existe des variantes aux modes de réalisation présentés, par exemple les moyens de détection automatique d'une sortie du front de propagation de l'objet imagé en un point courant peuvent utiliser des moyens d'estimation de la vitesse locale du front en ce point (par exemple par exploitation de mesures de distance), les moyens de fixation de la vitesse de la propagation à zéro étant activés pour une vitesse locale inférieure à un seuil de vitesse, et que ces variantes restent dans l'esprit et sous la portée de la présente invention.

## Revendications

**1.** Station d'imagerie médicale incluant des moyens d'acquisition pour obtenir des images (IM) présentant des niveaux de gris, des moyens d'affichage (DIS) pour afficher les images, des moyens de segmentation (SEG) pour segmenter au moins un objet imagé lesdits moyens de segmentation déterminant une zone dite segmentation (IMS) délimitant l'objet imagé sur l'image, des moyens d'extraction de trajectoire (TR) pour extraire au moins une trajectoire (PAT) au sein de la segmentation (IMS) **caractérisé en ce que** les moyens d'extraction incluent :

- des moyens de positionnement (POS) d'un point initial (PI) sur la segmentation,
- des moyens de propagation (PROP) d'un front au sein de la segmentation à partir du point initial (PI),
- des moyens de test (TES) de connexité du front,
- des moyens de labellisation (LAB) des portions du front, nommées ramifications, lorsqu'un front non connexe est détecté,
- des moyens d'identification (IDE) de points finaux (PF) de la propagation sur les ramifications,
- des moyens de tracé de trajectoire (TRA) pour tracer une trajectoire à partir des points finaux (PF) et du point initial. (PI)

**2.** Station d'imagerie médicale selon la revendication 1, **caractérisée en ce que** les moyens de test (TES) sont activés à chaque fois que le front s'est propagé sur une distance prédéterminée.

**3.** Station d'imagerie médicale selon l'une des revendications 1 ou 2, **caractérisée en ce qu'**une trajectoire (PAT) est tracée par les moyens de tracé (TRA) de trajectoire entre au moins un point final de ramification et le point initial (PI).

**4.** Station d'imagerie médicale selon l'une des revendications 1 ou 2, **caractérisée en ce qu'**elle inclut en outre des moyens de détermination (LOC) de points d'embranchement (PE) entre les ramifications.

**5.** Station d'imagerie médicale selon la revendication 4, **caractérisée en ce que** les moyens de détermination (LOC) de points d'embranchement (PE) utilisent une recherche sur les voxels par lesquels passe une trajectoire tracée par les moyens de tracé de trajectoire (TRA).

**6.** Station d'imagerie médicale selon l'une des revendications 4 ou 5, **caractérisée en ce que** des portions de trajectoire sont tracées entre les points finaux (PF) et les points d'embranchement (PE) entre les points d'embranchements (PE) et enfin entre les points d'embranchement (PE) et le point initia (PI) de manière à obtenir une trajectoire ramifiée.

**7.** Dispositif d'extraction d'une trajectoire destiné à être couplé avec des moyens de segmentation (SEG) qui fournissent au dispositif une segmentation (IMS) d'une image représentant un objet imagé dans une image présentant des niveaux de gris, ledit dispositif étant **caractérisé en ce qu'**il inclut :

- des moyens de positionnement (POS) d'un point initial (PI) sur la segmentation,
- des moyens de propagation (PROP) d'un front au sein de la segmentation à partir du point initial (PI)
- des moyens de test (TES) de connexité du front,
- des moyens de labellisation (LAB) des portions du front, nommées ramifications, lorsque un front non connexe est détecté,
- des moyens d'identification (IDE) de points finaux de la propagation sur les ramifications,
- des moyens de tracé de trajectoire (TRA) pour tracer une trajectoire entre deux points donnés de l'image.

**8.** Procédé d'extraction d'une trajectoire destiné à être couplé avec un procédé de segmentation qui fournit au procédé d'extraction, une segmentation d'une image représentant un objet imagé dans une image présentant des niveaux de gris, ledit procédé étant **caractérisé en ce qu'**il inclut :

- une étape de positionnement d'un point initial sur la segmentation,
- une étape de propagation d'un front au sein de la segmentation à partir du point initial,
- une étape de test de connexité du front activée chaque fois que le front a parcouru une distance prédéterminée,
- une étape de labellisation des portions du front, nommées ramifications, lorsque un front non connexe est détecté,
- une étape d'identification de points finaux de la propagation sur les ramifications,
- une étape de tracé de trajectoire pour tracer une trajectoire entre deux points donnés de l'image.

**9.** Produit programme d'ordinateur comprenant des portions/moyens/instructions de code de programme pour l'exécution des étapes du procédé selon la revendication 8 lorsque ledit programme est exécuté sur un ordinateur.

**Claims**

**1.** A medical imaging station including acquisition means for obtaining images (IM) exhibiting levels of gray, display means (DIS) for displaying the images, segmentation means (SEG) for segmenting at least one imaged object, said segmentation means determining a so-called segmentation zone (IMS) delimiting the imaged object in the image, and path extraction means (TR) for extracting at least one path (PAT) within the segmentation (IMS), **characterized in that** the extraction means include:

- means of positioning (POS) an initial point (PI) on the segmentation,
- means of propagating (PROP) an edge within the segmentation from the initial point (PI),
- means of testing (TES) the connectedness of the edge,
- means of labeling (LAB) portions of the edge, called ramifications, when an unconnected edge is detected,
- means of identifying (IDE) final points (PF) of the propagation on the ramifications,
- path tracing means (TRA) for tracing a path from the final points (PF) and the initial point (PI).

**2.** A medical imaging station as claimed in Claim 1, **characterized in that** the test means (TEST) are activated each time the edge is propagated over a predetermined distance.

**3.** A medical imaging station as claimed in one of Claims 1 or 2, **characterized in that** a path (PAT) is traced by the path tracing means (TRA) between at least one final ramification point and the initial point (PI).

**4.** A medical imaging station as claimed in one of Claims 1 or 2, **characterized in that** it also includes means of determining (LOC) fork points (PE) between the ramifications.

**5.** A medical imaging station as claimed in Claim 4, **characterized in that** the fork point (PE) determination means (LOC) use a search on the voxels through which there passes a path traced by the path tracing means (TRA).

**6.** A medical imaging station as claimed in one of Claims 4 or 5, **characterized in that** path portions are traced between the final points (PF) and the fork points (PE), between the fork points (PE) and finally between the fork points (PE) and the initial point (PI) so as to obtain a ramified path.

**7.** A device for extracting a path intended to be coupled with segmentation means (SEG) which supply to the device a segmentation (IMS) of an image representing an imaged object in an image exhibiting levels of gray, said device being **characterized in that** it includes:

- means of positioning (POS) an initial point (PI) on the segmentation,
- means of propagating (PROP) an edge within the segmentation from the initial point (PI),
- means of testing (TES) the connectedness of the edge,
- means of labeling (LAB) portions of the edge, referred to as ramifications, when a non-connected edge is detected,
- means of identifying (IDE) final points of the propagation on the ramifications,
- path tracing means (TRA) for tracing a path between two given points in the image.

**8.** A method of extracting a path intended to be coupled with a segmentation method which supplies to the extraction method a segmentation of an image representing an imaged object in an image exhibiting levels of gray, said method being **characterized in that** it includes:

- a step of positioning an initial point on the segmentation,
- a step of propagating an edge within the segmentation from the initial point,
- a step of testing the connectedness of the edge, activated whenever the edge has traveled a predetermined distance,
- a step of labeling portions of the edge, referred to as ramifications, when a non-connected edge is detected,
- a step of identifying final points of the propagation on the ramifications,
- a path tracing step for tracing a path between two given points in the image.

**9.** A computer program product comprising program code portions/means/instructions for executing steps of the method as claimed in Claim 8 when said program is executed on a computer.

**Patentansprüche**

**1.** Medizinisches Abbildungssystem mit Erfassungsmitteln für den Erhalt derjenigen Bilder (IM), die Graustufen aufweisen, Anzeigemitteln (DIS) für die Anzeige dieser Bilder, Segmentierungsmitteln (SEG) für die Segmentierung mindestens eines Bildobjekts, wobei die besagten Segmentierungsmittel eine so genannte Segmentierungszone (IMS) festlegen, die das Bildobjekt auf dem Bild abgrenzt, mit Mitteln zum Erzeugen einer Laufbahn (TR), um im Rahmen der Segmentierung (IMS) mindestens eine Laufbahn (PAT) zu erzeugen,

**dadurch gekennzeichnet, dass** die Mittel zum Erzeugen enthalten:

- Mittel zur Positionierung (POS) eines Initialpunktes (PI) in der Segmentierung,
- Mittel zur Propagation (PROP) einer Front im Rahmen der Segmentierung ab dem Initialpunkt (PI),
- Mittel zum Testen (TES) der Verbindung der Front,
- Mittel zur Kennzeichnung (LAB) der Abschnitte der Front mit der Bezeichnung Verzweigung, wenn eine Front ohne Verbindung erkannt wird,
- Mittel zur Erkennung (IDE) der Endpunkte (PF) der Propagation in den Verzweigungen,
- Mittel zum Zeichnen der Laufbahn (TRA), um eine Laufbahn ausgehend von den Endpunkten (PF) und dem Initialpunkt (PI) zu zeichnen.

**2.** Medizinisches Abbildungssystem nach Anspruch 1, **dadurch gekennzeichnet, dass** die Mittel zum Testen (TES) jedes Mal dann aktiviert werden, wenn die Front auf eine vorbestimmte Entfernung propagiert wurde.

**3.** Medizinisches Abbildungssystem nach Anspruch 1 oder 2, **dadurch gekennzeichnet, dass** eine Laufbahn (PAT) von den Mitteln zum Zeichnen (TRA) der Laufbahn zwischen mindestens einem Endpunkt der Verzweigung und dem Initialpunkt (PI) gezeichnet wird.

**4.** Medizinisches Abbildungssystem nach Anspruch 1 oder 2, **dadurch gekennzeichnet, dass** es außerdem Mittel zur Bestimmung (LOC) der Gabelungspunkte (PE) zwischen den Verzweigungen enthält.

**5.** Medizinisches Abbildungssystem nach Anspruch 4, **dadurch gekennzeichnet, dass** die Mittel zur Bestimmung (LOC) von Gabelungspunkten (PE) eine Suche nach Voxeln verwenden, durch die eine Laufbahn verläuft, die von den Mitteln zum Zeichnen de Laufbahn (TRA) gezeichnet wurde.

**6.** Medizinisches Abbildungssystem nach Anspruch 4 oder 5, **dadurch gekennzeichnet, dass** Abschnitte der Laufbahn zwischen den Endpunkten (PF) und den Gabelungspunkten (PE), zwischen den Gabelungspunkten (PE) und schließlich zwischen den Gabelungspunkten (PE) und dem Initialpunkt (PI) gezeichnet werden, um eine verzweigte Laufbahn zu erhalten.

7. Anordnung zum Erzeugen einer Laufbahn, dafür bestimmt, mit Mitteln zur Segmentierung (SEG) gekoppelt zu werden, die der Anordnung eine Segmentierung (IMS) eines Bildes bereitstellen, das ein Bildobjekt in einem Bild verkörpert, das Graustufen aufweist, wobei die besagte Anordnung **dadurch gekennzeichnet ist, dass** sie enthält:

- Mittel zur Positionierung (POS) eines Initialpunktes (PI) in der Segmentierung,
- Mittel zur Propagation (PROP) einer Front im Rahmen der Segmentierung ab dem Initialpunkt (PI),
- Mittel zum Testen (TES) der Verbindung der Front,
- Mittel zur Kennzeichnung (LAB) der Abschnitte der Front mit der Bezeichnung Verzweigung, wenn eine Front ohne Verbindung erkannt wird,
- Mittel zur Erkennung (IDE) der Endpunkte der Propagation in den Verzweigungen,
- Mittel zum Zeichnen der Laufbahn (TRA), um eine Laufbahn zwischen zwei bestimmten Bildpunkten zu zeichnen.

8. Verfahren zum Erzeugen einer Laufbahn, dafür bestimmt, mit einem Verfahren zur Segmentierung gekoppelt zu werden, das ein Verfahren zum Erzeugen bereitstellt, wobei eine Segmentierung eines Bildes ein Bildobjekt in einem Bild verkörpert, das Graustufen aufweist, wobei das besagte Verfahren **dadurch gekennzeichnet ist, dass** es enthält:

- einen Schritt zur Positionierung eines Initialpunktes in der Segmentierung,
- einen Schritt zur Propagation einer Front im Rahmen der Segmentierung ab dem Initialpunkt,
- einen Schritt zum Testen der Verbindung der aktivierten Front immer dann, wenn die Front eine vorbestimmte Entfernung zurückgelegt hat,
- einen Schritt zur Kennzeichnung der Abschnitte der Front mit der Bezeichnung Verzweigung, wenn eine Front ohne Verbindung erkannt wird,
- einen Schritt zur Erkennung der Endpunkte der Propagation in den Verzweigungen,
- einen Schritt zum Zeichnen der Laufbahn, um eine Laufbahn zwischen zwei bestimmten Bildpunkten zu zeichnen.

9. Softwareprogrammprodukt mit Abschnitten/Mitteln/Anweisungen eines Programmcodes für die Ausführung der Schritte des Verfahrens nach Anspruch 8, wenn das besagte Programm auf einem Rechner ausgeführt wird.

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1058913 A